# EUROPÄISCHE PATENTSCHRIFT

(11) **EP 3 964 109 B1**
(45) Veröffentlichungstag und Bekanntmachung des Hinweises auf die Patenterteilung: **15.02.2023**
(21) Anmeldenummer: 21189435.7
(22) Anmeldetag: 03.08.2021
(51) Int. Cl.: A47J 43/07

(54) **ELEKTRISCH BETRIEBENES KÜCHENGERÄT MIT EINER ELEKTRISCHEN SCHNITTSTELLE FÜR EIN ZUBEREITUNGSGEFÄSS**
ELECTRICALLY OPERATED KITCHEN APPLIANCE WITH AN ELECTRICAL INTERFACE FOR A PREPARATION VESSEL
ROBOT DE CUISINE ÉLECTRIQUE DOTÉ D'UNE INTERFACE ÉLECTRIQUE POUR UN RÉCIPIENT DE PRÉPARATION

(30) Priorität: 04.09.2020 DE 102020123218
(43) Veröffentlichungstag der Anmeldung: 09.03.2022
(73) Patentinhaber: Vorwerk & Co. Interholding GmbH, 42275 Wuppertal (DE)
(72) Erfinder: POHL, Stephan, 42113 Wuppertal (DE); LANG, Torsten, 42657 Solingen (DE); MEHLHASE, Dietmar, 50733 Köln (DE)
(74) Vertreter: Müller, Enno

(56) Entgegenhaltungen:
- EP-A1- 3 017 737
- EP-A1- 3 701 846
- EP-A1- 3 706 305
- DE-A1-102016 116 757

## Beschreibung

### Gebiet der Technik

Die Erfindung betrifft ein elektrisch betriebenes Küchengerät mit mindestens zwei Funktionseinrichtungen zur Ausübung einer Funktion des Küchengerätes und mit einem Aufnahmebereich zur Halterung eines Zubereitungsgefäßes, wobei der Aufnahmebereich eine elektrische Schnittstelle mit einer Mehrzahl von elektrischen Kontaktelementen aufweist, wobei die elektrischen Kontaktelemente jeweils einerseits elektrisch leitend mit einer Funktionseinrichtung des Küchengerätes verbunden sind, und andererseits eingerichtet sind, eine elektrisch leitende Verbindung zu korrespondierenden elektrischen Gefäßkontaktelementen eines mit dem Aufnahmebereich verbundenen Zubereitungsgefäßes herzustellen.

### Stand der Technik

Elektrisch betriebene Küchengeräte und Zubereitungsgefäße dafür sind im Stand der Technik bekannt. Ein Gerätegehäuse weist üblicherweise einen Aufnahmebereich auf, mit welchem das Zubereitungsgefäß in einer bestimmten Orientierung verbindbar ist. Insbesondere kann der Aufnahmebereich nach der Art einer Mulde ausgebildet sein, in welche das Zubereitungsgefäß formkorrespondierend einsetzbar ist, insbesondere so, dass das Zubereitungsgefäß im Zuge des Verbindens mit dem Küchengerät sowohl in Bezug auf eine vertikale Richtung, als auch in Bezug auf eine Umfangsrichtung des Zubereitungsgefäßes ausgerichtet wird.

In dem Aufnahmebereich ist eine elektrische Schnittstelle angeordnet, die einer elektrischen Verbindung zu Einrichtungen des Zubereitungsgefäßes dient. Darüber hinaus kann der Aufnahmebereich beispielsweise auch eine Rotationswelle aufweisen, welche zum Antrieb eines sich in dem Zubereitungsgefäß befindenden Rührwerkes dient. Das Rührwerk wird beispielsweise zur Zubereitung von Speisen über einen küchengerätseitigen Elektromotor angetrieben.

Des Weiteren ist es bekannt, dass die in dem Aufnahmebereich angeordnete elektrische Schnittstelle eine Mehrzahl von elektrischen Kontaktelementen aufweist, beispielsweise Kontaktelemente für eine Heizung des Zubereitungsgefäßes, elektrische Kontaktelemente für Temperatursensoren oder ein mit einem Schutzleiter verbundenes Kontaktelement. Das für einen Einsatz mit dem Küchengerät vorgesehene Zubereitungsgefäß weist korrespondierende elektrische Gefäßkontaktelemente auf, die bei Verbindung des Zubereitungsgefäßes mit der elektrischen Schnittstelle des Küchengerätes automatisch in Kontakt mit den elektrischen Kontaktelementen des Küchengerätes gelangen und somit auch automatisch mit den Funktionseinrichtungen des Küchengerätes verbunden werden, beispielsweise einer Heizeinrichtung oder Detektionseinrichtung.

Ein elektrisch betriebenes Küchengerät der vorgenannten Art zeigt beispielsweise die Veröffentlichung DE 10 2010 016 667 A1. Ein weiteres elektrisches Küchengerät gemäß der Präambel des unabhängigen Anspruchs wird in der Druckschrift EP 3701846 A1 offenbart.

Bei den im Stand der Technik bekannten Küchengeräten sowie Zubereitungsgefäßen ist es bekannt, die Anzahl und Anordnung der elektrischen Kontaktelemente an dem Küchengerät sowie dem Zubereitungsgefäß korrespondierend zueinander auszugestalten, wobei je nach einer aktuellen Modellreihe des Küchengerätes bzw. Zubereitungsgefäßes eine bestimmte Abfolge der elektrischen Kontaktelemente vorgegeben sein kann. Dementsprechend ist es möglich, dass ein Zubereitungsgefäß einer neuen Modellreihe eine andere Zuordnung der elektrischen Kontaktelemente zu den Funktionseinrichtungen des Küchengerätes aufweist als eine ältere Generation, so dass beispielsweise ein an einer bestimmten Position an dem Zubereitungsgefäß angeordnetes elektrisches Kontaktelement zur elektrischen Verbindung mit einer Detektionseinrichtung des Küchengerätes dient, während diese Position bei einer früheren Generation des Zubereitungsgefäßes zur elektrischen Verbindung mit einer Heizeinrichtung vorgesehen war.

### Zusammenfassung der Erfindung

Ausgehend von dem vorgenannten Stand der Technik ist es daher Aufgabe der Erfindung, das elektrisch betriebene Küchengerät so auszubilden, dass dessen Funktionseinrichtungen, nämlich beispielsweise eine Heizeinrichtung und eine Detektionseinrichtung, mit verschiedenen Zubereitungsgefäßen funktionieren.

Zur Lösung der vorgenannten Aufgabe wird vorgeschlagen, dass das Küchengerät eine den elektrischen Kontaktelementen zugeordnete Umschalteinrichtung aufweist, die eingerichtet ist, eine Verbindungszuordnung zwischen den elektrischen Kontaktelementen des Küchengerätes und den Funktionseinrichtungen des Küchengerätes so zu ändern, dass eine bestimmte Funktionseinrichtung nach Betätigung der Umschalteinrichtung mit einem anderen elektrischen Kontaktelement verbunden ist als vor der Betätigung der Umschalteinrichtung.

Erfindungsgemäß weist das elektrisch betriebene Küchengerät nunmehr eine Umschalteinrichtung auf, die eingerichtet und ausgebildet ist, elektrische Verbindungsleitungen zwischen den elektrischen Kontaktelementen und den Funktionseinrichtungen des Küchengerätes so zu variieren, dass diese an die Anordnung von elektrischen Gefäßkontaktelementen eines Zubereitungsgefäßes, welches aktuell mit dem Küchengerät verwendet werden soll, angepasst sind. Dadurch ist es möglich, bei ein und demselben Küchengerät eine elektrische Schnittstelle zur Verfügung zu stellen, mit welcher zwei unterschiedliche Zubereitungsgefäße verwendet werden können, deren Anordnungen von elektrischen Gefäßkontaktelementen zueinander abweichend sind. Die den elektrischen Kontaktelementen zugeordnete Umschalteinrichtung kann beispielsweise entweder durch einen Nutzer betätigt werden, oder automatisch in Folge einer Detektion einer bestimmten Art eines mit dem Küchengerät aktuell verbundenen Zubereitungsgefäßes betätigt werden.

Es wird vorgeschlagen, dass die Funktionseinrichtung eine Heizeinrichtung zum Heizen des Zubereitungsgefäßes, eine Detektionseinrichtung zum Detektieren einer Temperatur des Zubereitungsgefäßes oder eine elektrische Schutzeinrichtung ist. Neben den vorgenannten Funktionseinrichtungen kann das Küchengerät auch noch andere Funktionseinrichtungen aufweisen, die eine bestimmte Funktion für das Zubereitungsgefäß bereitstellen, beispielsweise zur Detektion weiterer Parameter des Zubereitungsgefäßes oder einer in dem Zubereitungsgefäß vorhandenen Speise oder Zutat. Bei einer Funktionseinrichtung des Küchengerätes handelt es sich um eine Einrichtung des Küchengerätes, welche eine bestimmte zugeordnete Tätigkeit in oder an dem Zubereitungsgefäß bewirkt. Üblicherweise befindet sich ein dazu korrespondierendes Funktionselement in oder an dem Zubereitungsgefäß. Beispielsweise kann das Zubereitungsgefäß ein Heizelement aufweisen, welches von der Heizeinrichtung des Küchengerätes betreibbar ist. Das Heizelement kann beispielsweise in einen Gefäßboden des Zubereitungsgefäßes integriert sein. Das Heizelement ist beispielsweise ein elektrisches Widerstandsheizelement, insbesondere ein NTC (sogenannter Heißleiter). Die in dem Küchengerät ausgebildete Funktionseinrichtung liefert über korrespondierende elektrische Kontaktelemente einen elektrischen Strom, mit welchem das Funktionselement des Zubereitungsgefäßes dann durchflossen wird. Ebenso kann die Funktionseinrichtung des Küchengerätes auch eine Detektionseinrichtung aufweisen, die über die elektrischen Kontaktelemente der Schnittstelle eine elektrische Spannung abgreift, welche kennzeichnend für einen bestimmten Zustand an oder innerhalb des Zubereitungsgefäßes ist, der eine Änderung der elektrischen Spannung an den korrespondierenden elektrischen Gefäßkontaktelementen bewirkt.

Es wird insbesondere vorgeschlagen, dass die Umschalteinrichtung des Küchengerätes eine elektrische Schaltung mit einer Mehrzahl von elektrischen Verbindungsleitungen aufweist, welche die elektrischen Kontaktelemente definiert veränderbar mit den elektrischen Funktionseinrichtungen verbinden. Die Umschalteinrichtung ist vorzugsweise auf einer elektrischen Leiterplatte (Printed Circuit Board, PCB) des Küchengerätes ausgebildet. Die elektrischen Verbindungsleitungen sind dann in diesem Zusammenhang auf die Leiterplatte gedruckte Leiterbahnen, die die elektrischen Kontaktelemente der Schnittstelle mit elektrischen Anschlüssen der Funktionseinrichtungen verbinden. Darüber hinaus weist die Umschalteinrichtung entsprechende Schaltelemente auf, mit deren Hilfe die elektrischen Verbindungsleitungen umgeschaltet werden können, um beispielsweise entweder ein erstes elektrisches Kontaktelement, oder ein zweites elektrisches Kontaktelement, je nach der Art des aktuell mit dem Küchengerät verbundenen Zubereitungsgefäßes, elektrisch leitend mit einer bestimmten definierten Funktionseinrichtung des Küchengerätes zu verbinden. Ein solches Schaltelement der elektrischen Schaltung kann beispielsweise ein Halbleiterschalter, insbesondere ein Transistor oder eine Diode, sein.

Des Weiteren wird vorgeschlagen, dass die Umschalteinrichtung ein mechanisches Schaltelement aufweist. Insbesondere kann es sich bei dem mechanischen Schaltelement um einen durch einen Nutzer des Küchengerätes manuell betätigbaren Schalter handeln. Das mechanische Schaltelement kann insbesondere beispielsweise ein Druckknopf, Schiebeschalter oder ähnliches sein, welcher eine oder mehrere elektrische Verbindungsleitungen zwischen elektrischen Kontaktelementen des Küchengerätes und elektrischen Funktionseinrichtungen des Küchengerätes umschaltet. Insbesondere empfiehlt es sich, dass durch Betätigung des mechanischen Schaltelementes gleichzeitig mehrere elektrische Verbindungsleitungen umgeschaltet werden. Das mechanische Schaltelement vertauscht die Verbindungsleitungen somit untereinander, so dass immer eine für ein bestimmtes Zubereitungsgefäß geeignete Zuordnung von elektronischen Signalen gegeben ist. Sofern ein bestimmtes anderes Zubereitungsgefäß als zuvor mit dem Küchengerät verbunden wird, kann der Nutzer manuell das mechanische Schaltelement betätigen und dann eine für dieses Zubereitungsgefäß geeignete Umschaltung der Verbindungsleitungen bewirken, so dass die Funktionseinrichtungen des Küchengerätes bzw. die elektrischen Kontaktelemente des Küchengerätes mit den elektrischen Gefäßkontaktelementen korrespondieren und die Funktionen des Zubereitungsgefäßes somit optimal in Verbindung mit dem Küchengerät genutzt werden können. Alternativ zu einem manuell durch einen Nutzer betätigbaren Schalter kann die Umschaltung der elektrischen Verbindungsleitungen auch durch eine oder mehrere mechanische Brücken erreicht werden, die zwischen den Verbindungsleitungen entsprechend positioniert werden. Beispielsweise kann für jedes definierte Zubereitungsgefäß an einer bestimmten Stelle der elektrischen Schaltung eine Brücke geschaltet werden, um eine bestimmte Verbindung zwischen einem elektrischen Kontaktelement und einer bestimmten Funktionseinrichtung des Küchengerätes herzustellen, die mit einer bestimmten Anordnung von elektrischen Gefäßkontaktelementen des Zubereitungsgefäßes korrespondiert.

Des Weiteren kann vorgesehen sein, dass das Küchengerät einen Sensor zur Detektion einer Art eines mit der elektrischen Schnittstelle des Küchengerätes verbundenen Zubereitungsgefäßes aufweist, wobei die Umschalteinrichtung eingerichtet ist, die Verbindungszuordnung zwischen den elektrischen Kontaktelementen und den Funktionseinrichtungen in Abhängigkeit von der detektierten Art des Zubereitungsgefäßes umzuschalten. Gemäß dieser Ausgestaltung weist das Küchengerät einen Sensor zum Erkennen einer bestimmten Art eines Zubereitungsgefäßes auf, um dann eine automatisierte Umschaltung von für dieses Zubereitungsgefäß geeigneten elektrischen Verbindungen an dem Küchengerät vorzunehmen. Auf diese Art und Weise kann beispielsweise erkannt werden, ob aktuell ein Zubereitungsgefäß einer neueren oder älteren Generation mit dem Küchengerät verwendet wird. Der Sensor kann beispielsweise ein Kontaktsensor, magnetischer Sensor oder optischer Sensor sein. Beispielsweise kann ein Teilbereich des Zubereitungsgefäßes eine definierte Formcodierung aufweisen, welche von einem Kontaktsensor des Küchengerätes erkannt werden kann. Der Kontaktsensor kann beispielsweise ein Schalter sein, welcher nur durch den definiert geformten Teilbereich, beispielsweise Vorsprung, des Zubereitungsgefäßes betätigt werden kann. Des Weiteren kann das Zubereitungsgefäß einen optischen Code, beispielsweise einen Strichcode, Barcode oder QR-Code aufweisen, welcher eine Identifikation des Zubereitungsgefäßes enthält und mittels einer entsprechenden Leseeinrichtung des Küchengerätes ausgelesen werden kann. In diesem Sinne ist der Sensor des Küchengerätes dann ein optischer Sensor, welcher das optische Signal des Zubereitungsgefäßes erkennen kann. Ebenso kann das Küchengerät auch einen magnetischen Sensor aufweisen, welcher einen korrespondierenden magnetischen Code des Zubereitungsgefäßes auslesen kann.

Des Weiteren kann vorgesehen sein, dass die Umschalteinrichtung des Küchengerätes ein elektromagnetisch wirkendes, fernbetätigtes Schaltelement aufweist. Dieses fernbetätigte Schaltelement kann insbesondere ein Relais sein. Diese Ausführungsform eignet sich insbesondere in Zusammenhang mit einer automatischen Detektion der Art eines aktuell mit dem Küchengerät verbundenen Zubereitungsgefäßes. In diesem Sinne kann vollautomatisch zunächst eine Erkennung der Art des Zubereitungsgefäßes erfolgen, und sodann eine automatische Umschaltung der elektrischen Verbindungsleitungen, um die Funktionseinrichtungen des Küchengerätes mit denjenigen elektrischen Kontaktelementen des Küchengerätes zu verbinden, die das angeschlossene Zubereitungsgefäß benötigt. Eine Mitwirkung eines Nutzers des Küchengerätes ist somit nicht erforderlich. Der Nutzer muss selbst nicht die Art des Zubereitungsgefäßes kennen und dann manuell eine Umschaltung der elektrischen Verbindungsleitungen initiieren. Stattdessen erfolgt die Anpassung des Küchengerätes vollautomatisch ohne Zutun des Nutzers oder gar so, dass der Nutzer die vorgenommenen Umschaltvorgänge gar nicht wahrnehmen kann.

Des Weiteren wird vorgeschlagen, dass der Aufnahmebereich des Küchengerätes eine Führungseinrichtung aufweist, welche eingerichtet ist, ein mit dem Aufnahmebereich zu verbindendes Zubereitungsgefäß formkorrespondierend zu der elektrischen Schnittstelle zu führen. Insbesondere kann es sich bei der Führungseinrichtung um einen sich von einer Gehäuseoberseite des Küchengerätes erhebenden Kragen handeln, in welchen ein Teilbereich des Zubereitungsgefäßes, beispielsweise ein Gefäßfuß, eingesetzt werden kann. Besonders bevorzugt ist die Führungseinrichtung so ausgebildet, dass das Zubereitungsgefäß ohne besonderes Zutun des Nutzers in eine bestimmte Position und Orientierung relativ zu der Schnittstelle des Küchengerätes gezwungen wird. Dies kann dadurch erfolgen, dass die Führungseinrichtung beispielsweise eine sich in Richtung des Küchengerätes verjüngende Kontur aufweist, entlang welcher das Zubereitungsgefäß der Schwerkraft folgend in die richtige Position gleitet, nämlich so, dass die elektrischen Gefäßkontaktelemente des Zubereitungsgefäßes in elektrisch leitenden Kontakt mit den elektrischen Kontaktelementen der Schnittstelle des Küchengerätes gelangen. Grundsätzlich kann die Führungseinrichtung auch eine Schienenführung oder ähnliches aufweisen. Besonders bevorzugt sind in jedem Fall solche Ausbildungen, bei welchen der Nutzer nicht besondere Aufmerksamkeit darauf richten muss, mit welcher Orientierung er das Zubereitungsgefäß mit dem Küchengerät verbindet.

Es wird vorgeschlagen, dass der Aufnahmebereich zusätzlich eine Rotationswelle zur kraftübertragenden Verbindung mit einem Rührwerk des Zubereitungsgefäßes aufweist. Gemäß dieser Ausgestaltung weist der Aufnahmebereich des Küchengerätes somit nicht nur eine elektrische Schnittstelle zur Verbindung mit dem Zubereitungsgefäß auf, sondern vielmehr auch eine Rotationswelle, die zum Anschluss eines Rührwerks des Zubereitungsgefäßes dienen kann. Das Rührwerk kann beispielsweise ein durch eine Bodenöffnung des Zubereitungsgefäßes in ein Inneres des Zubereitungsgefäßes ragendes Rührwerk sein, das ein Knetwerkzeug, einen Messersatz oder ähnliches trägt. Der Antriebsmotor sitzt dabei in dem Küchengerät und treibt das Rührwerk über die nach außen ragende Rotationswelle an. Durch die Verbindung des Zubereitungsgefäßes mit dem Aufnahmebereich der Küchenmaschine kommt es gleichzeitig mit der Verbindung der elektrischen Schnittstelle auch zu einer Verbindung der Rotationswelle mit dem Rührwerk, so dass die Funktionseinrichtungen des Küchengerätes optimal und vollständig genutzt werden können.

### Kurze Beschreibung der Zeichnungen

Im Folgenden wird die Erfindung anhand von Ausführungsbeispielen näher erläutert. Es zeigen:
- Fig. 1: ein erfindungsgemäßes Küchengerät mit einem Zubereitungsgefäß,
- Fig. 2: eine perspektivische Draufsicht auf das Küchengerät,
- Fig. 3: eine Draufsicht auf das Küchengerät mit einer elektrischen Schnittstelle zur Verbindung des Zubereitungsgefäßes,
- Fig. 4: eine vergrößerte Ansicht eines unteren Teilbereiches des Zubereitungsgefäßes,
- Fig. 5a: ein Verbindungsschema für die elektrischen Gefäßkontaktelemente eines ersten Zubereitungsgefäßes,
- Fig. 5b: ein Verbindungsschema für die elektrischen Gefäßkontaktelemente eines zweiten Zubereitungsgefäßes,
- Fig. 6: eine Umschalteinrichtung des Küchengerätes zur Umschaltung von Verbindungszuordnungen zwischen elektrischen Kontaktelementen des Küchengerätes und Funktionseinrichtungen des Küchengerätes.

### Beschreibung der Ausführungsformen

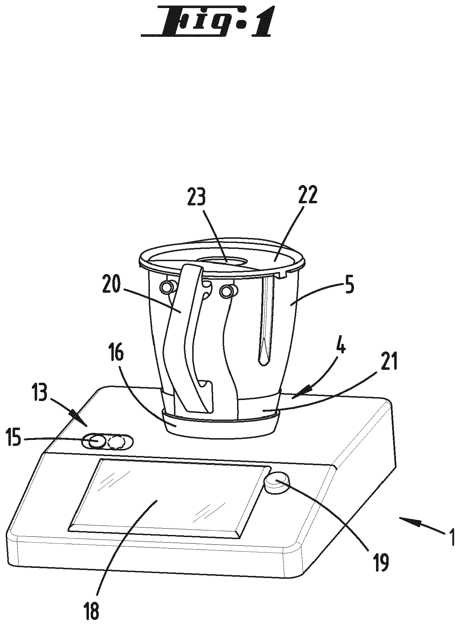

Figur 1 zeigt ein Küchengerät 1, welches einen Aufnahmebereich 4 zur Verbindung mit einem Zubereitungsgefäß 5 aufweist. Das Küchengerät 1 ist hier beispielsweise besonders flach ausgebildet. Das Zubereitungsgefäß 5 steht auf einer Oberseite des Küchengerätes 1 und ist nicht von diesem umfasst. Auf diese Art und Weise kann das flachbauende Küchengerät 1 beispielsweise besonders platzsparend in einer Schublade einer Küche verstaut werden. Das Küchengerät 1 verfügt über ein Display 18 zum Anzeigen von Funktionen des Küchengerätes 1 und gegebenenfalls Rezepten, welche mittels des Küchengerätes 1 zubereitet werden können. Neben dem Display 18 befindet sich ein Schalter 19, welcher einerseits zum Ein- und Ausschalten des Küchengerätes 1, und andererseits zum Bestätigen von Eingabebefehlen oder ähnlichem dienen kann.

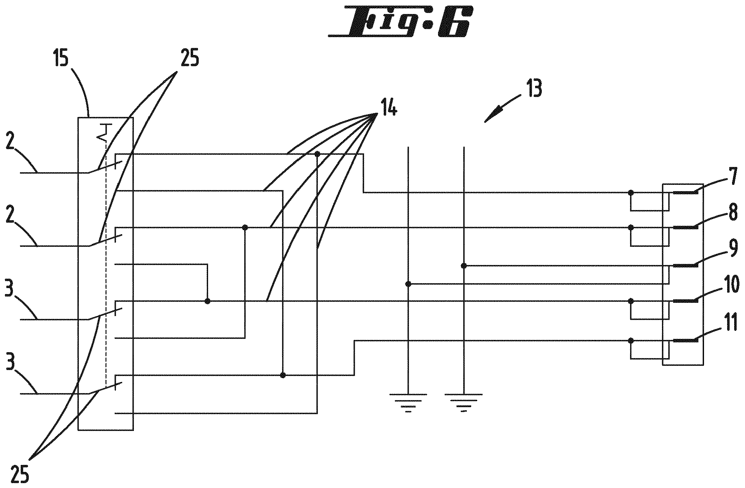

Das Zubereitungsgefäß 5 weist des Weiteren beispielsweise einen Griff 20 und einen Gefäßfuß 21 auf, welcher zur Verbindung mit dem Aufnahmebereich 4 des Küchengerätes 1 dient, sowie einen, eine Gefäßöffnung verschließenden Deckel 22 mit einer Deckelöffnung 23. Durch die Deckelöffnung 23 hindurch können beispielsweise Zutaten während einer laufenden Zubereitung des Küchengerätes 1 in das Zubereitungsgefäß 5 eingegeben werden. Auf der Oberseite des Gehäuses des Küchengerätes 1 befindet sich des Weiteren ein mechanisches Schaltelement 15, welches der Betätigung einer Umschalteinrichtung 13 (siehe Figur 6) des Küchengerätes 1 dient. Das Schaltelement 15 kann sich grundsätzlich an jeder beliebigen Position an dem Küchengerät 1 befinden, insbesondere oben, unten oder seitlich an dem Gehäuse des Küchengerätes 1. Das Schaltelement 15 ist hier beispielsweise als mechanischer Schiebeschalter ausgebildet, welcher von einer ersten, mit durchgehender Linie dargestellten Position in eine zweite, mit gestrichelter Linie dargestellte Position verschiebbar ist. Die Funktion der Umschalteinrichtung 13 wird später noch mit Bezug zu den weiteren Figuren erläutert.

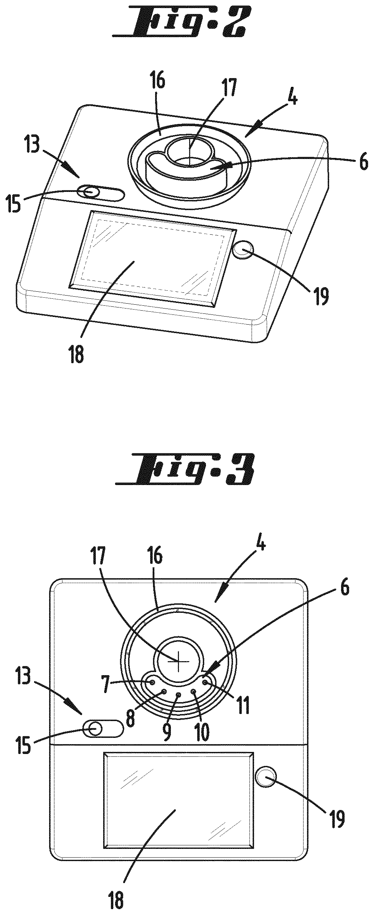

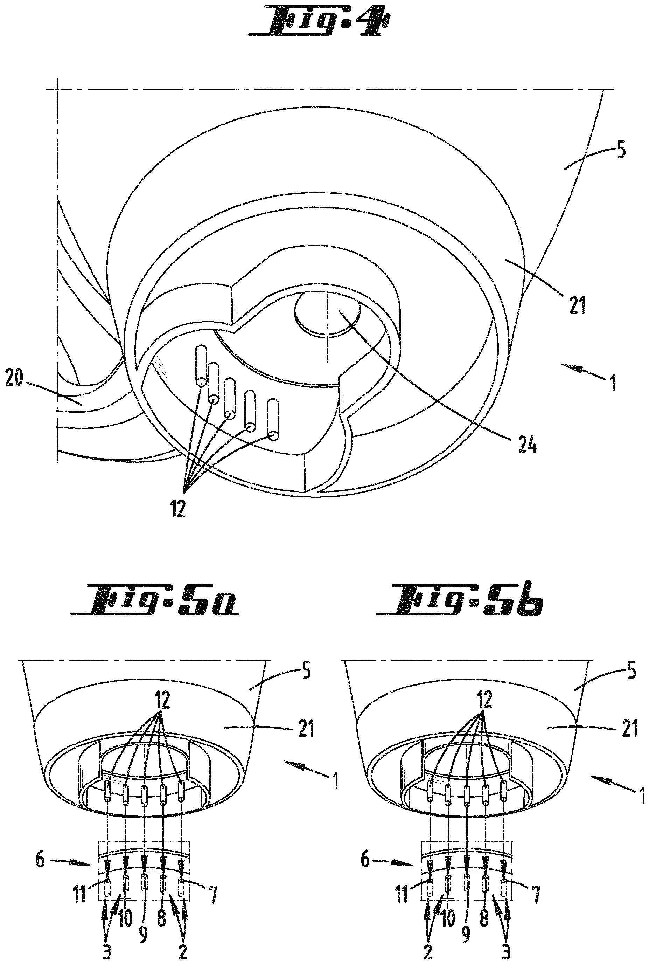

Die Figuren 2 und 3 zeigen das Küchengerät 1 in einer Draufsicht ohne damit verbundenes Zubereitungsgefäß 5. Dem Aufnahmebereich 4 des Zubereitungsgefäßes 5 ist eine Führungseinrichtung 16 zugeordnet, welche hier beispielsweise als von dem Gehäuse des Küchengerätes 1 nach oben empor stehender Kragen ausgebildet ist. In diesen Kragen kann der Gefäßfuß 21 des Zubereitungsgefäßes 5 zumindest teilweise eingeführt werden. Dabei sind der Gefäßfuß 21 und die Führungseinrichtung 16 vorzugsweise formkorrespondierend zueinander ausgebildet, so dass das Zubereitungsgefäß 5 bei Verbinden mit dem Küchengerät 1 der Schwerkraft folgend automatisch in eine definierte Position und Orientierung relativ zu dem Aufnahmebereich 4 gezwungen wird. Der Aufnahmebereich 4 weist innerhalb der Kontur der Führungseinrichtung 16 eine elektrische Schnittstelle 6 mit einer Mehrzahl von elektrischen Kontaktelementen 7, 8, 9, 10, 11 auf. Hier weist die elektrische Schnittstelle 6 beispielsweise konkret insgesamt fünf elektrische Kontaktelemente 7, 8, 9, 10, 11 auf. Jedes der elektrischen Kontaktelemente 7, 8, 9, 10, 11 dient einer bestimmten Funktion des Küchengerätes 1 bzw. des mit dem Küchengerät 1 verbundenen Zubereitungsgefäßes 5. Zu diesem Zweck ist jedes der elektrischen Kontaktelemente 7, 8, 9, 10, 11 mit einer bestimmten Funktionseinrichtung 2, 3 (siehe Figur 6) des Küchengerätes 1 verbunden. Hier handelt es sich bei einer ersten Funktionseinrichtung 2 beispielsweise um eine Heizeinrichtung des Küchengerätes 1, und bei einer zweiten Funktionseinrichtung 3 beispielsweise um eine Detektionseinrichtung zur Detektion eines Parameters des mit dem Küchengerät 1 verbundenen Zubereitungsgefäßes 5. Die elektrischen Kontaktelemente 7, 8, 9, 10, 11 sind hier beispielsweise nach der Art von elektrischen Buchsen ausgebildet, in welche korrespondierende elektrische Gefäßkontaktelemente 12 des Zubereitungsgefäßes 5 (siehe Figur 4) eingesteckt werden können. In dem Aufnahmebereich 4 des Küchengerätes 1 befindet sich des Weiteren eine Rotationswelle 17, die einem Antriebsmotor des Küchengerätes 1 zugeordnet ist. Die Rotationswelle 17 dient zum Antrieb eines in dem Zubereitungsgefäß 5 angeordneten Rührwerks, welches beispielsweise eingerichtet ist, Lebensmittel in dem Zubereitungsgefäß 5 zu rühren oder zu zerkleinern.

Figur 4 zeigt einen unteren Teilbereich des Zubereitungsgefäßes 5 mit dem Gefäßfuß 21. An der Unterseite des Zubereitungsgefäßes 5 sind elektrische Gefäßkontaktelemente 12 angeordnet, die in Anzahl, Form und Anordnung zu den elektrischen Kontaktelementen 7, 8, 9, 10, 11 des Küchengerätes 1 korrespondieren. Die elektrischen Gefäßkontaktelemente 12 sind hier als Kontaktstifte ausgebildet, die in die als Buchsen ausgebildeten elektrischen Kontaktelemente 7, 8, 9, 10, 11 der elektrischen Schnittstelle 6 des Küchengerätes 1 eingesteckt werden können. Zu erkennen ist an der Unterseite des Zubereitungsgefäßes 5 des Weiteren eine Durchtrittsöffnung 24, welche zum Durchtritt der Rotationswelle 17 des Küchengerätes 1 in das Innere des Zubereitungsgefäßes 5 dient. Der Gefäßfuß 21 weist des Weiteren eine äußere Fußkontur auf, die zu der Form der Führungseinrichtung 16 des Aufnahmebereiches 4 des Küchengerätes 1 korrespondiert, so dass das Zubereitungsgefäß 5 optimal zu dem Aufnahmebereich 4 des Küchengerätes 1 ausgerichtet werden kann.

Die Figuren 5a und 5b zeigen jeweils ein Zubereitungsgefäß 5 einer ersten Art (Figur 5a) und einer zweiten Art (Figur 5b), sowie schematisch dieselbe elektrische Schnittstelle 6 des Küchengerätes 1 mit elektrischen Kontaktelementen 7, 8, 9, 10, 11, deren Zuordnung zu bestimmten Funktionseinrichtungen 2, 3 des Küchengerätes 1 je nach der Art des verbundenen Zubereitungsgefäßes 5 zueinander abweichend ist. Die elektrische Schnittstelle 6 des Küchengerätes 1 weist von links nach rechts betrachtet zunächst elektrische Kontaktelemente 10 und 11 auf, welche in Figur 5a einer Funktionseinrichtung 3, nämlich hier beispielsweise einer Temperaturdetektionseinrichtung, zugeordnet sind. Das mittlere elektrische Kontaktelement 9 dient dem Anschluss des Zubereitungsgefäßes 5 an eine elektrische Schutzeinrichtung. Die elektrischen Kontaktelemente 7, 8 sind einer anderen Funktionseinrichtung 2 des Küchengerätes 1 zugeordnet, nämlich hier beispielsweise einer Heizeinrichtung zum Betrieb eines korrespondierenden Heizelementes des Zubereitungsgefäßes 5, beispielsweise einer in einen Bodenbereich des Zubereitungsgefäßes 5 integrierten Widerstandsheizung. Die Belegung der elektrischen Kontaktelemente 7, 8, 9,10,11 des Küchengerätes 1 gemäß Figur 5a dient dem Anschluss von elektrischen Gefäßkontaktelementen 12 des Zubereitungsgefäßes 5 der ersten Art. Bei dieser Art Zubereitungsgefäß 5 kann es sich beispielsweise um ein aktuelles Zubereitungsgefäß 5 des Herstellers handeln. Demgegenüber zeigt Figur 5b beispielsweise ein Zubereitungsgefäß 5 einer älteren Version, dessen elektrische Gefäßkontaktelemente 12 zu anderen Einrichtungen des Zubereitungsgefäßes 5 gehören. Um ein solches Zubereitungsgefäß 5 ebenso an dasselbe Küchengerät 1 anschließen und alle Funktionseinrichtungen 2, 3 des Küchengerätes 1 optimal nutzen zu können, weist das Küchengerät 1 die Umschalteinrichtung 13 auf, welche mit Bezug zu Figur 6 näher dargestellt wird. Die Umschalteinrichtung 13 des Küchengerätes 1 bewirkt, dass die elektrischen Kontaktelemente 7, 8, 9, 10, 11 des Aufnahmebereiches 4 des Küchengerätes 1 so umgeschaltet werden, dass deren Anschluss an die Funktionseinrichtungen 2, 3 zu den elektrischen Gefäßkontaktelementen 12 des jeweiligen Zubereitungsgefäßes 5 des Herstellers korrespondiert. Das Ergebnis einer solchen Umschaltung ist im Vergleich der Figuren 5a und 5b erkennbar. In dem Schaltzustand der elektrischen Schnittstelle 6 gemäß Figur 5a sind die elektrischen Kontaktelemente 10, 11 des Küchengerätes 1 der Funktionseinrichtung 3, nämlich der Detektionseinrichtung, zugeordnet, während die elektrischen Kontaktelemente 7, 8 der Funktionseinrichtung 2, nämlich der Heizeinrichtung, zugeordnet sind. Nach Betätigung des Schaltelementes 15 werden die Zuordnungen zwischen den Funktionseinrichtungen 2, 3 und den elektrischen Kontaktelementen 7, 8, 10, 11 so geändert, dass sich das in Figur 5b dargestellte Ergebnis zeigt. Dabei sind die elektrischen Kontaktelemente 10, 11 nun der Funktionseinrichtung 2, nämlich der Heizeinrichtung, zugeordnet, während die elektrischen Kontaktelemente 7, 8 der Funktionseinrichtung 3, nämlich der Detektionseinrichtung zugeordnet sind. Dadurch korrespondiert die Anordnung der elektrischen Kontaktelemente 7, 8, 9, 10, 11 gemäß Figur 5b beispielsweise zu einer Verschaltung der elektrischen Gefäßkontaktelemente 12 einer älteren Version des Zubereitungsgefäßes 5.

Figur 6 zeigt die Umschalteinrichtung 13, welche der Umschaltung der Zuordnung zwischen den elektrischen Kontaktelementen 7, 8, 9, 10, 11 der elektrischen Schnittstelle 6 und den Funktionseinrichtungen 2, 3 des Küchengerätes 1 dient. Die Umschalteinrichtung 13 ist hier beispielsweise mit dem mechanischen Schaltelement 15 (siehe beispielsweise Figuren 1 bis 3) verbunden, so dass der Nutzer durch Betätigung, d. h. Verschiebung, des Schaltelementes 15 ein Umschalten von Verbindungsleitungen 14 der elektronischen Schaltung bewirken kann. Wie in Figur 6 vereinfacht und schematisch dargestellt, bewirkt das Verschieben des Schaltelementes 15 ein Umschalten der zu den Funktionseinrichtungen 2, 3 des Küchengerätes 1 führenden elektrischen Kontaktelemente 7, 8, 10, 11 des Küchengerätes. Wie in der Figur 6 erkennbar, bewirkt die Betätigung des Schaltelementes 15 (bezogen auf die Darstellungsebene von oben nach unten) ein Verschwenken von Schaltkontakten 25 nach unten, so dass die Funktionseinrichtungen 2, 3 mit anderen elektrischen Kontaktelementen 7, 8, 10, 11 der elektrischen Schnittstelle 6 leitend verbunden werden. Dies betrifft insbesondere eine Umschaltung der elektrischen Kontaktelemente 7, 8 und 10, 11. Das elektrische Kontaktelement 9, welches die Verbindung zu dem Schutzleiter herstellt, bleibt unverändert an der vorherigen Position. Durch Betätigung des Schaltelementes 15 ausgehend von der in Figur 6 dargestellten Schaltstellung, werden über die Schaltkontakte 25 ersichtlich die elektrischen Zuordnungen der elektrischen Kontaktelemente 7 und 11 bzw. 8 und 10 miteinander getauscht. Dies führt dazu, dass die elektrischen Kontaktelemente 7, 8 des Küchengerätes 1 nach Betätigung des Schaltelementes 15 dann nicht mehr der Heizeinrichtung des Küchengerätes 1 zugeordnet sind, sondern vielmehr der Detektionseinrichtung. Die elektrischen Kontaktelemente 10, 11 sind nach dem Umschalten der Funktionseinrichtung 2, nämlich der Heizeinrichtung, zugeordnet. Die dargestellte Umschaltung kann auch nur teilweise stattfinden, d. h., dass beispielsweise nur die Verbindungsleitung 14 zu der Heizeinrichtung geändert wird, jedoch nicht gleichzeitig eine Umschaltung der Detektionseinrichtung erfolgt.

Obwohl dies hier nicht dargestellt ist, ist die Umschalteinrichtung 13 nur exemplarisch zu verstehen. Darüber hinaus kann es sich bei dem Schaltelement 15 alternativ auch um ein automatisiert gesteuertes Schaltelement, zum Beispiel ein Relais, handeln, welches in Abhängigkeit von dem Ergebnis einer Detektion einer Art oder Version eines Zubereitungsgefäßes 5 an dem Aufnahmebereich 4 geschaltet wird. In diesem Sinne erfolgt eine ferngesteuerte Umschaltung der Zuordnungen zwischen den elektrischen Kontaktelementen 7, 8, 9, 10, 11 des Küchengerätes 1 und den Funktionseinrichtungen 2, 3 des Küchengerätes 1. Zu diesem Zweck kann dem Aufnahmebereich 4 ein hier nicht weiter dargestellter Sensor zugeordnet sein, welcher die Art eines Zubereitungsgefäßes 5 erkennen kann und in Abhängigkeit davon ein Signal zur Umschaltung der Verbindungsleitungen 14 ausgibt. Des Weiteren kann die Umschalteinrichtung 13 alternativ auch manuell von einem Nutzer durch Bedienung des vorzugsweise berührungsempfindlichen Displays 18 oder des Schalters 19 betätigt werden.

### Liste der Bezugszeichen

- 1: Küchengerät
- 2: Funktionseinrichtung
- 3: Funktionseinrichtung
- 4: Aufnahmebereich
- 5: Zubereitungsgefäß
- 6: Elektrische Schnittstelle
- 7: Elektrisches Kontaktelement
- 8: Elektrisches Kontaktelement
- 9: Elektrisches Kontaktelement
- 10: Elektrisches Kontaktelement
- 11: Elektrisches Kontaktelement
- 12: Elektrisches Gefäßkontaktelement
- 13: Umschalteinrichtung
- 14: Verbindungsleitung
- 15: Schaltelement
- 16: Führungseinrichtung
- 17: Rotationswelle
- 18: Display
- 19: Schalter
- 20: Griff
- 21: Gefäßfuß
- 22: Deckel
- 23: Deckelöffnung
- 24: Durchtrittsöffnung
- 25: Schaltkontakt

## Patentansprüche

1. Elektrisch betriebenes Küchengerät (1) mit mindestens zwei Funktionseinrichtungen (2, 3) zur Ausübung einer Funktion des Küchengerätes (1) und mit einem Aufnahmebereich (4) zur Halterung eines Zubereitungsgefäßes (5), wobei der Aufnahmebereich (4) eine elektrische Schnittstelle (6) mit einer Mehrzahl von elektrischen Kontaktelementen (7, 8, 9, 10, 11) aufweist, wobei die elektrischen Kontaktelemente (7, 8, 9, 10, 11) jeweils einerseits elektrisch leitend mit einer Funktionseinrichtung (2, 3) des Küchengerätes (1) verbunden sind, und andererseits eingerichtet sind, eine elektrisch leitende Verbindung zu korrespondierenden elektrischen Gefäßkontaktelementen (12) eines mit dem Aufnahmebereich (4) verbundenen Zubereitungsgefäßes (5) herzustellen, **dadurch gekennzeichnet, dass** das Küchengerät (1) eine den elektrischen Kontaktelementen (7, 8, 9, 10, 11) zugeordnete Umschalteinrichtung (13) aufweist, die eingerichtet ist, eine Verbindungszuordnung zwischen den elektrischen Kontaktelementen (7, 8, 9, 10, 11) des Küchengerätes und den Funktionseinrichtungen (2, 3) des Küchengerätes (1) so zu ändern, dass eine bestimmte Funktionseinrichtung (2, 3) nach Betätigung der Umschalteinrichtung (13) mit einem anderen elektrischen Kontaktelement (7, 8, 9,10,11) verbunden ist als vor der Betätigung der Umschalteinrichtung (13).

2. Küchengerät (1) nach Anspruch 1, **dadurch gekennzeichnet, dass** die Funktionseinrichtung (2, 3) eine Heizeinrichtung zum Heizen des Zubereitungsgefäßes (5), eine Detektionseinrichtung zum Detektieren einer Temperatur des Zubereitungsgefäßes (5) oder eine elektrische Schutzeinrichtung ist.

3. Küchengerät (1) nach Anspruch 1 oder 2, **dadurch gekennzeichnet, dass** die Umschalteinrichtung (13) eine elektrische Schaltung mit einer Mehrzahl von elektrischen Verbindungsleitungen (14) aufweist, welche die elektrischen Kontaktelemente (7, 8, 9, 10, 11) definiert veränderbar mit den elektrischen Funktionseinrichtungen (2, 3) verbinden.

4. Küchengerät (1) nach einem der vorhergehenden Ansprüche, **dadurch gekennzeichnet, dass** die Umschalteinrichtung (13) ein mechanisches Schaltelement (15) aufweist, insbesondere einen durch einen Nutzer des Küchengerätes (1) manuell betätigbaren Schalter.

5. Küchengerät (1) nach einem der vorhergehenden Ansprüche, **gekennzeichnet durch** einen Sensor zur Detektion einer Art eines mit der elektrischen Schnittstelle (6) des Küchengerätes (1) verbundenen Zubereitungsgefäßes (5), wobei die Umschalteinrichtung (13) eingerichtet ist, die Verbindungszuordnung zwischen den elektrischen Kontaktelementen (7, 8, 9, 10, 11) und den Funktionseinrichtungen (2, 3) in Abhängigkeit von der detektierten Art des Zubereitungsgefäßes (5) umzuschalten.

6. Küchengerät (1) nach Anspruch 5, **dadurch gekennzeichnet, dass** der Sensor ein Kontaktsensor, magnetischer Sensor oder optischer Sensor ist.

7. Küchengerät (1) nach einem der vorhergehenden Ansprüche, **dadurch gekennzeichnet, dass** die Umschalteinrichtung (13) ein elektromagnetisch wirkendes, fernbetätigtes Schaltelement (15), insbesondere ein Relais, aufweist.

8. Küchengerät (1) nach einem der vorhergehenden Ansprüche, **dadurch gekennzeichnet, dass** der Aufnahmebereich (4) eine Führungseinrichtung (16) aufweist, welche eingerichtet ist, ein mit dem Aufnahmebereich (4) zu verbindendes Zubereitungsgefäß (5) formkorrespondierend zu der elektrischen Schnittstelle (6) zu führen.

9. Küchengerät (1) nach einem der vorhergehenden Ansprüche, **dadurch gekennzeichnet, dass** der Aufnahmebereich (4) zusätzlich eine Rotationswelle (17) zur kraftübertragenden Verbindung mit einem Rührwerk des Zubereitungsgefäßes aufweist.

## Claims

1. An electrically operated kitchen appliance (1) comprising at least two functional means (2, 3) for performing a function of the kitchen appliance (1) and comprising a receiving region (4) for holding a preparation vessel (5), wherein the receiving region (4) has an electrical interface (6) comprising a plurality of electrical contact elements (7, 8, 9, 10, 11), wherein the electrical contact elements (7, 8, 9, 10, 11) are in each case connected in an electrically conductive manner to a functional means (2, 3) of the kitchen appliance (1) on the one hand, and are configured on the other hand to establish an electrically conductive connection to corresponding electrical vessel contact elements (12) of a preparation vessel (5), which is connected to the receiving region (4), **characterized in that** the kitchen appliance (1) has a switch-over means (13), which is assigned to the electrical contact elements (7, 8, 9, 10, 11) and which is configured to change a connection assignment between the electrical contact elements (7, 8, 9, 10, 11) of the kitchen appliance (1) and the functional means (2, 3) of the kitchen appliance (1) in such a way that after the actuation of switch-over means (13), a certain functional means (2, 3) is connected to a different electrical contact element (7, 8, 9, 10, 11) than prior to the actuation of the switch-over means (13) .

2. The kitchen appliance (1) according to claim 1, **characterized in that** the functional means (2, 3) is a heating means for heating the preparation vessel (5), a detection means for detecting a temperature of the preparation vessel (5), or an electrical protection means.

3. The kitchen appliance (1) according to claim 1 or 2, **characterized in that** the switch-over means (13) has an electrical circuit comprising a plurality of electrical connecting lines (14), which connect the electrical contact elements (7, 8, 9, 10, 11) to the electrical functional means (2, 3) in a defined changeable manner.

4. The kitchen appliance (1) according to one of the preceding claims, **characterized in that** the switch-over means (13) has a mechanical switching element (15), in particular a switch, which can be manually actuated by a user of the kitchen appliance (1).

5. The kitchen appliance (1) according to one of the preceding claims, **characterized by** a sensor for detecting a type of a preparation vessel (5), which is connected to the electrical interface (6) of the kitchen appliance (1), wherein the switch-over means (13) is configured to switch over the connecting assignment between the electrical contact elements (7, 8, 9, 10, 11) and the functional means (2, 3) as a function of the detected type of the preparation vessel (5).

6. The kitchen appliance (1) according to claim 5, **characterized in that** the sensor is a contact sensor, magnetic sensor, or optical sensor.

7. The kitchen appliance (1) according to one of the preceding claims, **characterized in that** the switch-over means (13) has an electromagnetically acting, remote-controlled switching element (15), in particular a relay.

8. The kitchen appliance (1) according to one of the preceding claims, **characterized in that** the receiving region (4) has a guide means (16), which is configured to guide a preparation vessel (5), which is to be connected to the receiving region (4), to the electrical interface (6) in a shape-corresponding manner.

9. The kitchen appliance (1) according to one of the preceding claims, **characterized in that** the receiving region (4) additionally has a rotating shaft (17) for the force-transmitting connection to an agitator of the preparation vessel.

## Revendications

1. Appareil de cuisine (1) à commande électrique avec au moins deux dispositifs fonctionnels (2, 3) pour l'exercice d'une fonction de l'appareil de cuisine (1) et avec une zone de réception (4) pour le maintien d'un récipient de préparation (5), la zone de réception (4) présentant une interface électrique (6) avec une pluralité d'éléments de contact électriques (7, 8, 9, 10, 11), les éléments de contact électriques (7, 8, 9, 10, 11) étant respectivement reliés d'une part de manière électriquement conductrice à un dispositif fonctionnel (2, 3) de l'appareil de cuisine (1), et étant d'autre part conçus pour établir une liaison électriquement conductrice avec des éléments de contact électriques de récipient (12) correspondants d'un récipient de préparation (5) relié à la zone de réception (4), **caractérisé en ce que** l'appareil de cuisine (1) présente un dispositif de commutation (13) associé aux éléments de contact électriques (7, 8, 9, 10, 11), qui est conçu pour établir une association de liaison entre les éléments de contact électriques (7, 8, 9, 10, 11) de l'appareil de cuisine et les dispositifs fonctionnels (2, 3) de l'appareil de cuisine (1) de telle sorte qu'un dispositif fonctionnel déterminé (2, 3) est relié, après actionnement du dispositif de commutation (13), à un autre élément de contact électrique (7, 8, 9, 10, 11) qu'avant l'actionnement du dispositif de commutation (13).

2. Appareil de cuisine (1) selon la revendication 1, **caractérisé en ce que** le dispositif fonctionnel (2, 3) est un dispositif de chauffage pour chauffer le récipient de préparation (5), un dispositif de détection pour détecter une température du récipient de préparation (5) ou un dispositif de protection électrique.

3. Appareil de cuisine (1) selon la revendication 1 ou 2, **caractérisé en ce que** le dispositif de commutation (13) présente un circuit électrique avec une pluralité de lignes de connexion électriques (14) qui relient les éléments de contact électriques (7, 8, 9, 10, 11) de manière variable et définie aux dispositifs fonctionnels électriques (2, 3).

4. Appareil de cuisine (1) selon l'une des revendications précédentes, **caractérisé en ce que** le dispositif de commutation (13) comporte un élément de commutation mécanique (15), en particulier un interrupteur pouvant être actionné manuellement par un utilisateur de l'appareil de cuisine (1).

5. Appareil de cuisine (1) selon l'une des revendications précédentes, **caractérisé par** un capteur pour détecter un type de récipient de préparation (5) relié à l'interface électrique (6) de l'appareil de cuisine (1), le dispositif de commutation (13) étant agencé pour commuter l'affectation de liaison entre les éléments de contact électriques (7, 8, 9, 10, 11) et les dispositifs fonctionnels (2, 3) en fonction du type détecté du récipient de préparation (5).

6. Appareil de cuisine (1) selon la revendication 5, **caractérisé en ce que** le capteur est un capteur de contact, un capteur magnétique ou un capteur optique.

7. Appareil de cuisine (1) selon l'une des revendications précédentes, **caractérisé en ce que** le dispositif de commutation (13) comporte un élément de commutation (15) à action électromagnétique et télécommandé, en particulier un relais.

8. Appareil de cuisine (1) selon l'une des revendications précédentes, **caractérisé en ce que** la zone de réception (4) présente un dispositif de guidage (16) qui est conçu pour guider un récipient de préparation (5) à relier à la zone de réception (4) en correspondance de forme avec l'interface électrique (6).

9. Appareil de cuisine (1) selon l'une des revendications précédentes, **caractérisé en ce que** la zone de réception (4) présente en outre un arbre de rotation (17) pour la liaison de transmission de force avec un agitateur du récipient de préparation.
